# EUROPÄISCHE PATENTSCHRIFT

(11) **EP 0 849 423 B1**
(45) Veröffentlichungstag und Bekanntmachung des Hinweises auf die Patenterteilung: **10.03.2004**
(21) Anmeldenummer: 97122475.3
(22) Anmeldetag: 19.12.1997
(51) Int. Cl.: E05B 65/20, E05B 47/00

(54) **Schliesseinrichtung**
Locking device
Dispositif de verrouillage

(30) Priorität: 21.12.1996 DE 19654875; 18.12.1997 DE 19756266
(43) Veröffentlichungstag der Anmeldung: 24.06.1998
(73) Patentinhaber: Siemens Aktiengesellschaft, 80333 München (DE)
(72) Erfinder: Werner, Willie, 66578 Schiffweiler (DE)

(56) Entgegenhaltungen:
- DE-A- 2 911 681
- US-A- 5 419 597
- US-A- 5 441 317

## Beschreibung

Die Erfindung betrifft eine Schließeinrichtung, insbesondere für Türen von Kraftfahrzeugen, gemäß den Merkmalen des Oberbegriffs des Anspruchs 1.

Eine solche Schließeinrichtung ist aus der DE-A-29 11 681 bekannt, die Schloßelemente wie zumindest Drehfalle und Sperrklinke aufweist. Dies sind Elemente des Türverschlusses, wobei zumindest eine Schloßelement über Verbindungselemente verstellbar ist. Weiterhin ist eine Stelleinrichtung vorhanden, durch die ein Diebstahlsicherungshebel in eine Entriegelungsstellung, eine Verriegelungsstellung und eine Diebstahlsicherungsstellung bewegbar ist.

Aus der US-A-54 41 317 ist eine Schließeinrichtung bekannt, die in einem Gehäuse angeordnet ist, das einen Stecker aufweist.

Eine weitere Schließeinrichtung ist aus der DE 196 35 415 bekannt, wobei eine Handhabe (z.B. Türinnengriff oder Türaußengriff) über Verbindungselemente wie Bowdenzug, Hebel, mit einem Schloßelement (Sperrklinke) verbindbar ist und wobei eine Stelleinrichtung vorhanden ist, mittels der die Verbindung zwischen der Handhabe und dem Schloßelement herstellbar oder aufhebbar ist. Zu diesem Zweck ist ein Koppelelement vorhanden, das von einer Stelleinrichtung zur Herstellung oder Aufhebung der Verbindung betätigbar ist. Ein solcher Aufbau stellt zwar sämtliche Funktionen der Schließeinrichtung wie Zentralverriegelungs-, Zentralentriegelungs-, Diebstahlsicherungs- und ggf. Kindersicherungsstellung sicher.

Ein großes Sicherheitsrisiko besteht jedoch darin, daß für den Fall, daß die Stelleinrichtung ausfällt, sich das Koppelelement in einer Stellung befindet, die ein Sicherheitsrisiko oder sogar eine Gefährdung der Insassen des Kraftfahrzeuges darstellt. Fällt die Stelleinrichtung nämlich in der Stellung Diebstahlsicherung aus, können die Insassen des Fahrzeuges die Tür nicht öffnen und das Fahrzeug nicht verlassen. Gerade nach einem Crash ist besonders gefährlich für die Insassen, wenn die Stelleinrichtung ausfällt. In diesem Fall verhält es sich so, daß Helfer nicht von außen an die verletzten oder bewußtlosen Insassen, die die Tür nicht mehr von innen öffnen können, herankommen, da die Schließeinrichtung weder ein Öffnen der Tür von innen noch von außen gestattet.

Andererseits kann es auch für den Benutzer des Fahrzeuges von Nachteil sein, daß sich die Schließeinrichtung zunächst in einer solchen Stellung befindet, die ein Öffnen der Tür erlaubt (Zentralentriegelungsstellung). Fällt in einer solchen Stellung die Schließeinrichtung aus und will der Benutzer das Fahrzeug verlassen, hat er keine Möglichkeit, die Türen abzuschließen, so daß Diebstahlgefahr besteht.

Diese geschilderten Nachteile treten grundsätzlich bei Stelleinrichtungen auf, wenn diese ausfallen, egal welcher Bauart sie sind.

Der Erfindung liegt daher die Aufgabe zugrunde, eine Schließeinrichtung bereitzustellen, die die oben genannten Nachteile vermeidet und einen sicheren Betrieb des Fahrzeuges gestattet.

Diese Aufgabe ist durch die Merkmale des Anspruchs 1 gelöst.

Der grundsätzliche Aufbau der vorliegenden Schließeinrichtung ist ein solcher, daß eine Handhabe (beispielsweise Türinnengriff oder Türaußengriff einer Tür), wobei es sich beispielsweise auch um eine Heckklappe oder sonstige Schließteile von Fahrzeugen handeln kann, über Verbindungselemente (wie beispielsweise Bowdenzüge, Gestänge oder dergleichen) mit einem Schloßelement verbindbar oder verbunden ist. Dieses Schloßelement, bei dem es sich beispielsweise um eine Sperrklinke handelt, wirkt auf ein weiteres Schloßelement, bei dem es sich beispielsweise um eine Drehfalle handelt. Bei der Kombination Sperrklinke/Drehfalle arretiert die Sperrklinke die Drehfalle in ihrer Schließstellung und gibt die Drehfalle, die einen Schließbolzen oder dergleichen umgreift, frei, wenn die Tür geöffnet werden soll. Die Betätigung der Sperrklinke erfolgt insbesondere manuell über die Betätigung der Handhabe, wobei in dem Kraftübertragungsweg zwischen der Handhabe und dem Schloßelement eine Stelle vorhanden ist, an der die Verbindung zwischen der Handhabe und dem Schloßelement herstellbar oder aufhebbar ist. Dies bewirkt, daß bei hergestellter Verbindung die Betätigung der Handhabe eine Betätigung der Sperrklinke bewirkt, während bei Aufhebung der Verbindung die Betätigung der Handhabe nicht auf die Sperrklinke wirkt und somit "ins Leere" geht.

Die Erfindung stellt nun Mittel bereit, die in dem Fall wirken, in dem die Stelleinrichtung - egal aus welchen Gründen - ausfällt. Diese Mittel werden bei der regulären Betätigung der Schließeinrichtung mitbetätigt oder weisen einen Freilauf auf, haben jedoch in diesen Fällen keine Wirkung. Fällt die Stelleinrichtung aus, erfolgt eine Notentriegelung oder eine Notverriegelung der Schließeinrichtung, indem mittels dieser Mittel die Stelleinrichtung der Schließeinrichtung übersteuert wird. Damit ist in vorteilhafter Weise sichergestellt, daß für den Fall, in dem die Schließeinrichtung in einer Stellung ausfällt, in der ein Öffnen der Tür nicht mehr möglich ist, diese entriegelt werden kann und für den Fall, daß die Stelleinrichtung in einer solchen Stellung ausfällt, in der ein Öffnen der Tür möglich wäre, die Schließeinrichtung in eine Stellung gebracht werden kann, in der das Öffnen der Tür nicht mehr möglich ist.

Ein weiterer konstruktiver Vorteil der Erfindung ist darin zu sehen, daß die Mittel der Stelleinrichtung zugeordnet sind, so daß zur Notverriegelung beziehungsweise zur Notentriegelung nur wenige Bauteile erforderlich sind, die auf die Stelleinrichtung und die von der Stelleinrichtung betätigten Elemente wirken, so daß sämtliche Elemente, die im Normalfall der Schließeinrichtung arbeiten, dazu verwendet werden, um die Notverriegelung beziehungsweise die Notentriegelung ausführen zu können. Damit vereinfacht sich der Aufbau der Schließeinrichtung.

In Weiterbildung der Erfindung ist für jede Handhabe zur Betätigung der Schließeinrichtung eine Stelleinrichtung vorhanden, die wiederum die Mittel zur Notverriegelung beziehungsweise Notentriegelung aufweisen. Somit ist einerseits durch unterschiedliche Ansteuerung einer Stelleinrichtung eine unterschiedliche Betätigungsmöglichkeit für den Türinnen- und den Türaußengriff gegeben, was beispielsweise in der Zentralverriegelungsstellung von Bedeutung ist. Hierbei ist ein Öffnen der Tür von außen nicht, ein Öffnen der Tür von innen jedoch möglich. Auch die Mittel zur Notentriegelung und/oder Notverriegelung können getrennt voneinander auf die jeweilige Stelleinrichtung wirken, wobei auch eine gemeinsame Betätigung der Stelleinrichtungen durch die Mittel denkbar ist.

In vorteilhafter Weise handelt es sich bei den Mitteln zur Notverriegelung beziehungsweise Notentriegelung um einen Schließzylinder für einen Schlüssel, mittels dem die Stelleinrichtung (beziehungsweise die Stelleinrichtungen) über Verbindungselemente zwischen Schließzylinder und Stelleinrichtung (wie beispielsweise Bowdenzug, Gestänge oder dergleichen oder auch eine direkte Anbindung) betätigbar ist.

In Weiterbildung der Erfindung ist die Schließeinrichtung in einem Gehäuse angeordnet, das zumindest einen Stecker aufweist. Damit ist einerseits eine kompakte Bauweise möglich, während aufgrund dieser modulartigen Ausgestaltung eine Serienfertigung möglich ist, die Schließeinrichtungen in dem Gehäuse bereitstellt, die vielseitig verwendbar ist. Die Integration eines Steckers in dem Gehäuse hat den Vorteil, daß über diesen Stecker zum einen die Stromversorgung für die zumindest eine Stelleinrichtung erfolgen kann, andererseits auch die Positionserfassung von Elementen der Schließeinrichtung, die in dem Gehäuse angeordnet sind, möglich ist und über den Stecker zu einer Steuereinrichtung übertragen werden kann. In besonders vorteilhafter Weise sind die Kontakte in dem Stecker in zumindest einer Hälfte des Gehäuses, die aus Kunststoff besteht, durch in der Gehäusehälfte eingelegte oder umspritzte Leiterbahnen weitergeführt und an den Stellen aus dem Gehäuse (der Gehäusehälfte) herausgeführt, an der sich zumindest eine Stelleinrichtung befindet. Dadurch kann durch einfaches Einlegen der Stelleinrichtung oder Verlötung oder dergleichen eine elektrische Kontaktierung hergestellt werden.

Weitere Ausgestaltungen der Erfindung sind im folgenden beschrieben und anhand der Figuren erläutert.

Es zeigen:
- Figur 1:: einen Aufbau einer erfindungsgemäßen Schließeinrichtung,
- Figur 2:: ein Gehäuse für eine Schließeinrichtung.

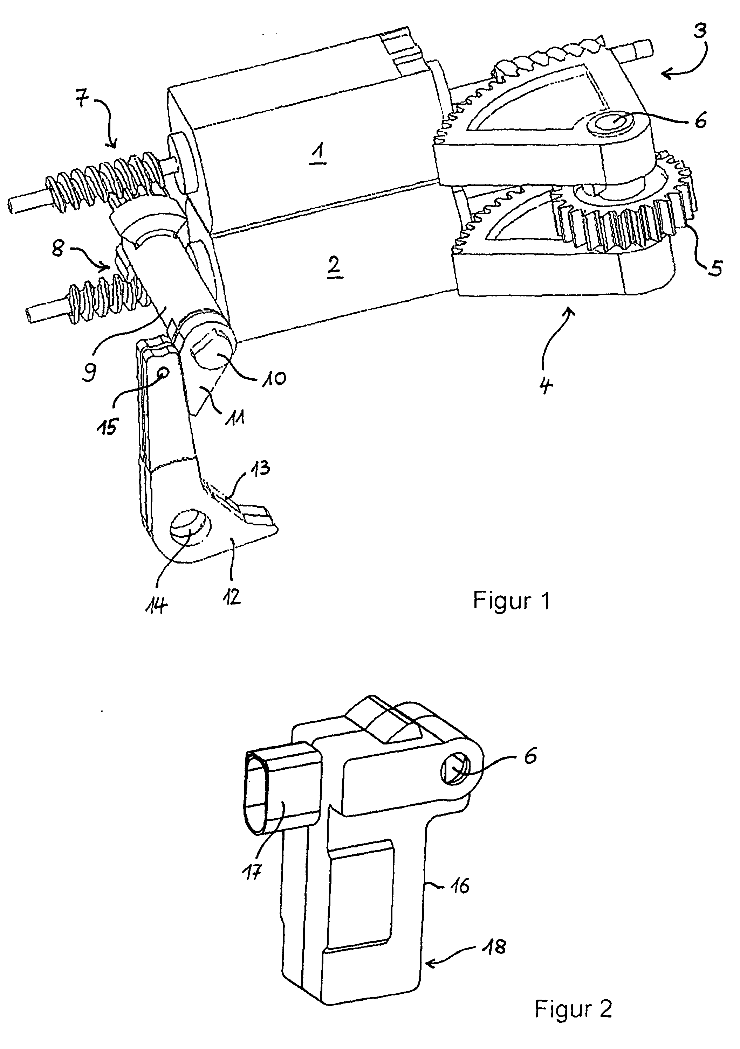

Figur 1 zeigt eine erfindungsgemäße Schließeinrichtung, bei welcher die Stelleinrichtung in vorteilhafter Weise als Elektromotor 1 ausgebildet ist. Die Verwendung eines Elektromotores ist von Vorteil, da dieser kostengünstig ist, leicht zu montieren ist und den erforderlichen Wirkungsgrad aufweist. Alternativ dazu sind selbstverständlich andere Stelleinrichtungen (wie beispielsweise Elektromagneten, hydraulische oder pneumatische Stelleinrichtungen) denkbar.

Weiterhin ist in Figur 1 gezeigt, daß für jede Handhabe zur Betätigung der Schließeinrichtung eine Stelleinrichtung (Elektromotor 1 und 2) vorhanden ist. Das heißt, daß durch entsprechende Ansteuerung der Elektromotoren 1 und 2 unterschiedliche Funktionen darstellbar sind. Die Ansteuerung eines Elektromotores kann beispielsweise in Abhängigkeit von der Erfassung der Betätigung einer Handhabe (beispielsweise mittels Schalter) erfolgen, wobei auch Logikfunktionen hinzukommen können. Unter einer solchen Logikfunktion ist zum Beispiel zu verstehen, daß bei eingestellter Kindersicherungsstellung zwar die Betätigung des Türinnengriffes erfaßt wird, eine solche Erfassung jedoch nicht zur Ansteuerung einer Stelleinrichtung führt, da in diesem Fall sich die Tür nicht von innen öffnen lassen soll.

Weiterhin ist in Figur 1 dargestellt, daß auf der einen Seite eines Elektromotores 1, 2, Schneckengetriebe 3, 4 vorhanden sind, bei denen es sich um die Mittel zur Notverriegelung und/oder Notentriegelung handelt. Diese Schneckengetriebe 3, 4, deren Steigungen so gewählt sind, daß sie freigängig sind, werden aufgrund der Drehung eines Zahnrades 5, das mit jedem Schneckengetriebesegment drehfest auf einer gemeinsamen Welle 6 angeordnet ist, bewegt. Entweder ist ein jedes Schneckengetriebesegment beispielsweise mit einem Schließzylinder oder dergleichen verbunden, oder - wie es in Figur 1 gezeigt ist - die Drehung eines Schließzylinders mittels eines Schlüssels wirkt auf das Zahnrad 5, um die Notverriegelung beziehungsweise Notentriegelung zu bewirken. Anstelle des Zahnrades 5 kann auch beispielsweise eine Scheibe für einen Zahnriemenantrieb oder eine Seilscheibe vorhanden sein. Denkbar ist auch der Einsatz eines Hebels, der beispielsweise in seinen beiden Endstellungen arretierbar oder mittels Federkraft festlegbar ist, wobei der Hebel auf das Schneckengetriebe 3 und/oder 4 oder das Zahnrad 5 oder die Welle 6 wirkt, wobei dieser Hebel an einer im Schließzustand der Tür nicht zugänglichen Stirnseite der Tür (in Richtung einer Säule des Fahrzeuges) angeordnet ist, so daß mittels dieses Hebels bei geöffneter Tür und ausgefallener Stelleinrichtung eine Notverriegelung möglich ist. Da dieser Hebel bei geschlossener Tür nicht zugänglich ist, ist auch eine Entriegelung mittels diesem nicht möglich.

Für die reguläre Betätigung der Schließeinrichtung, die beispielsweise ausgeht von einem über eine Fernbedienung übermittelten Stellbefehl, ist den Elektromotoren 1 und 2 gemäß Figur 1 ein weiteres, selbsthemmendes Schneckengetriebe 7 und 8 nachgeordnet, wobei aufgrund dieser Schneckengetriebe 7 und 8 eine Untersetzung stattfindet, um das von den Elektromotoren 1 und 2 erzeugte Drehmoment zu erhöhen. Die Schnecken der Schneckengetriebe 3, 4 und 7, 8 sind in vorteilhafter Weise abtriebsseitig auf den Wellenenden der Elektromotoren 1 und 2 gemäß Figur 1 angeordnet, wobei auch andere Getriebeformen (z.B. Kegelgetriebe) und andere Getriebearten (beispielsweise Zahnriemen, Seilantriebe) denkbar sind. Ebensogut können auch beide Getriebe bei einem Elektromotor oder alle 4 Getriebe bei zwei Elektromotoren auf nur einer Seite des Elektromotors angeordnet sein. Die Selbsthemmung hat den Vorteil, daß die eingenommene Stellung nicht durch Vibrationen, Krafteinwirkung auf die Elemente oder dergleichen veränderbar ist.

Die auf den Wellenenden der Elektromotoren 1 und 2 nicht näher bezeichneten Schnecken der Schneckengetriebe 7 und 8 wirken auf zugehörige Zahnsegmente, wobei das dem Schneckengetriebe 7 zugehörige Zahnsegment mit einer Stellhülse 9 und das dem Schneckengetriebe 8 zugehörige Zahnsegment mit einer Stellwelle 10 drehfest verbunden ist, wobei die Stellhülse und die Stellwelle 10 konzentrisch zueinander angeordnet sind. Eine voneinander getrennte Anordnung in Abtriebsrichtung der Schneckengetriebe 7 und 8 ist selbstverständlich auch möglich. Die konzentrische Anordnung hat jedoch Vorteile im Hinblick auf den zur Verfügung stehenden Bauraum, da dieser äußerst knapp ist. Die Stellwelle 10 ist abtriebsseitig drehfest mit einem Stellhebel 11 verbunden, während die Stellhülse 9 ebenfalls einen nicht gezeigten und nicht bezeichneten weiteren Stellhebel trägt. Diese beiden Stellhebel wirken jeweils auf einen dazugehörigen Betätigungshebel 12 beziehungsweise 13 wobei die Betätigungshebel 12 und 13 in vorteilhafter Weise um einen gemeinsamen Drehpunkt 14 gelagert sind und mit dem in Figur 1 nach rechts wegweisenden Ende auf ein Schloßelement (Sperrklinke, nicht dargestellt) wirken. Der Stellbereich der Stellhebel und/oder der Betätigungshebel 12, 13 kann zumindest einseitig, vorzugsweise beidseitig, durch Anschläge begrenzt werden. Dies ist ein Vorteil für die Ansteuerung der Elektromotore 1 und 2, da man diese im Blockbetrieb betreiben kann. Dies bedeutet, daß sie für eine etwas längere Zeit angesteuert werden, als für das komplette Durchlaufen eines Stellweges erforderlich wäre. Eine Stellungserfassung ist in diesem Fall entbehrlich.

Weiterhin weisen die beiden Betätigungshebel 12 und 13 Angriffspunkte 15 auf, an denen Verbindungselemente wie Bowdenzüge, Gestänge oder dergleichen angeschlagen sind, die zu einer Handhabe in der Tür, der Heckklappe oder dergleichen führen.

Die Funktionsweise der in Figur 1 gezeigten Schließeinrichtung ist folgende: Bei der in Figur 1 gezeigten Stellung des Stellhebels 11 und des nicht weiter gezeigten Stellhebels bewirkt eine Krafteinleitung am Angriffspunkt 15, die eine Drehung um den Drehpunkt 14 entgegen dem Uhrzeigersinn bewirkt, eine Auslenkung des Betätigungshebels 12 beziehungsweise 13 in der Weise, daß die Sperrklinke nicht oder nicht in einem solchen Maße betätigt wird, was zu einer Freigabe der Drehfalle aus ihrer Arretierstellung führt. Erst nach Ansteuerung eines Elektromotors oder beider Elektromotoren wird ein Betätigungshebel oder werden beide Betätigungshebel in eine solche Stellung gebracht, die es erlaubt, daß bei Krafteinleitung in den Angriffspunkt 15 und weitere Verdrehung eines Betätigungshebels oder beider Betätigungshebel um den Drehpunkt 14 entgegen dem Uhrzeigersinn eine Betätigung der Sperrklinke in dem Maß erfolgt, daß diese die Drehfalle in ihre Öffnungsstellung freigibt und eine Öffnen der Tür möglich ist. Denkbar ist auch die umgekehrte Vorgehensweise, daß heißt, daß Figur 1 eine solche Stellung zeigt, in der bei Krafteinleitung am Angriffspunkt 15 schon ein Öffnen der Tür möglich ist. Zur Rückführung der Betätigungshebel 12, 13 nach ausgeführter Bewegung in die Ausgangsstellung, wie sie in Figur 1 gezeigt ist, ist eine Krafteinleitung (beispielsweise mittels Federkraft) erforderlich, die eine Drehbewegung der Betätigungshebel 12 und 13 in Uhrzeigerrichtung bewirkt.

Der gleiche Vorgang spielt sich ab, wenn zur Notentriegelung beziehungsweise Notverriegelung eine Krafteinleitung in die Stelleinrichtungen (Elektromotor 1, 2) über die Schneckengetriebe 3 und 4 erfolgt.

Figur 2, die im Maßstab in Bezug auf Figur 1 kleiner dargestellt ist, zeigt ein Gehäuse 16, in dem zumindest die in Figur 1 gezeigten Komponenten untergebracht sind. Das Gehäuse 16, das insbesondere aus zwei Gehäusehälften, die in vorteilhafter Weise spiegelsymmetrisch ausgebildet sind, besteht, weist einen Stecker 17 (oder Buchse) auf, über welchen zumindest die Stromversorgung der Elektromotoren 1 und 2 erfolgt. Gleichzeitig können über diesen Stecker 17 auch Signale übertragen werden, die die Position zumindest eines der Elemente repräsentieren, die innerhalb des Gehäuses 16 angeordnet sind. Das Gehäuse 16 (beziehungsweise die Gehäusehälften) werden in vorteilhafter Weise aus Kunststoff gefertigt und umschließen staub- und feuchtigkeitsdicht die im Inneren angeordneten Elemente. Die gemeinsame Welle 6 ist von außen zugänglich, um damit eine Anbindung beispielsweise an den Schließzylinder zu ermöglichen. Denkbar ist auch, diese Welle 6 einenends mit einem Vierkant oder mit einer Aufnahme für einen Vierkant auszugestalten und an einer Stirnseite der Tür, die im geschlossenen Zustand der Tür nicht zugänglich ist, zu versehen. Die Welle 6 kann, muß aber nicht, dichtend in Bezug auf das Gehäuse 16 gelagert sein. Weiterhin ist noch in Figur 2 mit der Bezugsziffer 18 ein Austritt eines Teiles eines Betätigungshebels 12 oder 13 bezeichnet, wobei es sich um den dem Angriffspunkt 15 abgewandten Teil des Betätigungshebels handelt. Auch diese Teile können, müssen aber nicht, dichtend in Bezug auf das Gehäuse 16 austreten.

Es kann innerhalb des Gehäuses 16 von dem Stecker 17 zu den Elektromotoren eine Verkabelung erfolgen; andererseits ist es auch denkbar, diese Verkabelung in Form von Einlegeblechen (Stegen) auszuführen, die im Inneren des Gehäuses 16 aufgebracht oder sogar in dem Gehäuse 16 eingelegt (umspritzt) sind und zumindest die Verbindung von dem Stecker 17 zu den Elektromotoren darstellen. Ebenso können Aufnahmen für Lagerungen von Wellen (insbesondere die Enden der Wellen der Elektromotore 1 und 2) vorgesehen sein oder Wellen beim Herstellen des Gehäuses 16 eingebracht werden, auf die bei anschließender Montage Elemente wie zum Beispiel die Betätigungshebel 12 und 13 aufgeschoben werden.

### Bezugszeichenliste:

- 1.: Elektromotor
- 2.: Elektromotor
- 3.: Schneckengetriebe
- 4.: Schneckengetriebe
- 5.: Zahnrad
- 6.: gemeinsame Welle
- 7.: Schneckengetriebe
- 8.: Schneckengetriebe
- 9.: Stellhülse
- 10.: Stellwelle
- 11.: Stellhebel
- 12.: Betätigungshebel
- 13.: Betätigungshebel
- 14.: Drehpunkt
- 15.: Angriffspunkt
- 16.: Gehäuse
- 17.: Stecker
- 18.: Austritt

## Patentansprüche

1. Schließeinrichtung, insbesondere für Türen von Kraftfahrzeugen, mit Schloßelementen wie zumindest Drehfalle und Sperrklinke, wobei zumindest ein Schloßelement über Verbindungselemente mit zumindest einer Handhabe mittels zumindest einer Stelleinrichtung verbindbar ist oder diese Verbindung aufhebbar ist, **dadurch gekennzeichnet, daß** die Stelleinrichtung Mittel zur Notentriegelung und/oder Notverriegelung der Schließeinrichtung aufweist.

2. Schließeinrichtung nach Anspruch 1, **dadurch gekennzeichnet, daß** die Stelleinrichtung ein Elektromotor (1) ist, der abtriebsseitig ein selbsthemmendes Schneckengetriebe (7) aufweist, das auf einen Betätigungshebel (13) wirkt, der wiederum auf ein Schloßelement wirkt.

3. Schließeinrichtung nach einem der vorhergehenden Ansprüche, **dadurch gekennzeichnet, daß** die Stelleinrichtung ein Elektromotor (1) ist, der abtriebsseitig ein freigängiges Schneckengetriebe (3) aufweist, wobei das Schneckengetriebe (3) eingangsseitig mit den Mitteln zur Notverriegelung und/oder Notentriegelung verbunden oder verbindbar ist.

4. Schließeinrichtung nach Anspruch 1 und/oder 2, **dadurch gekennzeichnet, daß** die Stelleinrichtung ein Elektromotor (1) ist, der abtriebsseitig ein freigängiges Schneckengetriebe (3) aufweist, wobei das Schneckengetriebe (3) eingangsseitig mit den Mitteln zur Notverriegelung und/oder Notentriegelung verbunden oder verbindbar ist.

5. Schließeinrichtung nach einem der vorhergehenden Ansprüche, **dadurch gekennzeichnet, daß** für jede Handhabe zur Betätigung der Schließeinrichtung eine Stelleinrichtung vorhanden ist, die abtriebsseitig jeweils das freigängige Schneckengetriebe (3, 4) aufweist.

6. Schließeinrichtung nach einem der vorhergehenden Ansprüche, **dadurch gekennzeichnet, daß** die Schneckengetriebe (3, 4) gemeinsam oder getrennt voneinander betätigbar sind.

7. Schließeinrichtung nach einem der vorhergehenden Ansprüche, **dadurch gekennzeichnet, daß** die Mittel zur Notverriegelung und Notentriegelung gemeinsam vorhanden sind.

8. Schließeinrichtung nach einem der vorhergehenden Ansprüche, **dadurch gekennzeichnet, daß** die Schließeinrichtung in einem Gehäuse (16) angeordnet ist, das zumindest einen Stecker (17) aufweist.

## Claims

1. Locking device, in particular for doors of motor vehicles, having lock elements, such as at least a rotary latch and detent pawl, it being possible for at least one lock element to be connected to at least one handle via connecting elements by means of at least one adjusting device or for this connection to be cancelled, **characterized in that** the adjusting device has means for the emergency unlocking and/or locking of the locking device.

2. Locking device according to Claim 1, **characterized in that** the adjusting device is an electric motor (1) which has, on the output side, a self-locking worm gear (7) which acts on an actuating lever (13) which, in turn, acts on a lock element.

3. Locking device according to one of the preceding claims, **characterized in that** the adjusting device is an electric motor (1) which has, on the output side, a freely moving worm gear (3), the worm gear (3) being connected or connectable on the input side to the means for the emergency locking and/or emergency unlocking.

4. Locking device according to Claim 1 and/or 2, **characterized in that** the adjusting device is an electric motor (1) which has, on the output side, a freely moving worm gear (3), the worm gear (3) being connected or connectable on the input side to the means for the emergency locking and/or emergency unlocking.

5. Locking device according to one of the preceding claims, **characterized in that** each handle for actuating the locking device has an adjusting device which has the freely moving worm gear (3, 4) on the output side in each case.

6. Locking device according to one of the preceding claims, **characterized in that** the worm gears (3, 4) can be actuated together or separately from each other.

7. Locking device according to one of the preceding claims, **characterized in that** the means for the emergency locking and emergency unlocking are provided together.

8. Locking device according to one of the preceding claims, **characterized in that** the locking device is arranged in a housing (16) which has at least one connector (17).

## Revendications

1. Dispositif de verrouillage, en particulier pour les portes de véhicules automobiles, avec des éléments de serrure, par exemple au moins des loquets rotatifs et des cliquets de blocage, au moins un dispositif de déplacement permettant de relier au moins un élément de serrure à au moins une poignée par l'intermédiaire d'éléments de liaison ou permettant de supprimer cette liaison, **caractérisé en ce que** le dispositif de déplacement présente des moyens de déverrouillage central et/ou de verrouillage central du dispositif de verrouillage.

2. Dispositif de verrouillage selon la revendication 1, **caractérisé en ce que** le dispositif de déplacement est un moteur électrique (1) qui présente sur son côté de sortie une transmission hélicoïdale (7) autobloquante qui agit sur un levier d'actionnement (13) qui lui-même agit sur un élément de serrure.

3. Dispositif de verrouillage selon l'une des revendications précédentes, **caractérisé en ce que** le dispositif de déplacement est un moteur électrique (1) qui présente sur le côté de sortie une transmission hélicoïdale libre (3), la transmission hélicoïdale (3) étant reliée ou pouvant être reliée du côté de l'entrée aux moyens de verrouillage de secours et/ou de déverrouillage de secours.

4. Dispositif selon les revendications 1 et/ou 2, **caractérisé en ce que** le dispositif de déplacement est un moteur électrique (1) qui, du côté de sortie, présente une transmission hélicoïdale libre (3), la transmission hélicoïdale (3) étant reliée ou pouvant être reliée du côté de l'entrée aux moyens de verrouillage de secours et/ou de déverrouillage de secours.

5. Dispositif de verrouillage selon l'une des revendications précédentes, **caractérisé en ce que** pour chaque poignée, un dispositif de déplacement est prévu pour actionner le dispositif de verrouillage et présente du côté de sortie resp. la transmission hélicoïdale libre (3, 4).

6. Dispositif de verrouillage selon l'une des revendications précédentes, **caractérisé en ce que** les transmissions hélicoïdales (3, 4) peuvent être actionnées ensemble ou séparément l'une de l'autre.

7. Dispositif de verrouillage selon l'une des revendications précédentes, **caractérisé en ce que** les moyens de verrouillage de secours et de déverrouillage de secours sont prévus ensemble.

8. Dispositif de verrouillage selon l'une des revendications précédentes, **caractérisé en ce que** le dispositif de verrouillage est disposé dans un boîtier (16) qui présente au moins une fiche électrique (17).
